# EUROPEAN PATENT APPLICATION

(11) **EP 4 075 720 A1**
(43) Date of publication of application: **19.10.2022**
(21) Application number: 20898537.4
(22) Date of filing: 13.12.2020
(51) Int. Cl.: H04L 9/32, H04L 9/08

(54) **DEVICE AND METHOD FOR DIGITAL UTILIZATION OF CERTIFICATE DATA, AND PROGRAM THEREFOR**

(30) Priority: 12.12.2019 JP 2019224956
(71) Applicant: bitFlyer Blockchain, Inc., Minato-ku Tokyo 1076237 (JP)
(72) Inventor: KOMIYAMA, Takafumi, Tokyo 107-6237 (JP)
(74) Representative: Marks & Clerk LLP
(86) International application number: PCT/JP2020/046442
(87) International publication number: WO 2021/117904

(57) **Abstract**

The present invention enables digital utilization of certificate data with respect to attribute data representing one or a plurality of attributes of an entity being managed by an institution. An institution apparatus 100 receives a certificate data request (S201) and generates certificate data (S202). The institution apparatus 100 acquires, at the same time or around the time that the certificate data are generated, verification data for verification of the certificate data (S203). The institution apparatus 100 sends to the terminal 110 the certificate data 300 and the verification data 400 corresponding to the certificate data 300 (S204). The terminal 110 sends to the verification apparatus 120, requiring verification of one or a plurality of attributes of an individual using the terminal 110, the certificate data 300, and additionally sends one or a plurality of pieces of attribute data of one or a plurality of attributes to be certified and one or a plurality of hash values of respective pieces of attribute data obtained by excluding those attribute data from the verification apparatus 400, after adding a signature based on a secret key corresponding to a public key included in the certificate data 300 (S205).

## Description

### TECHNICAL FIELD

This invention relates to an apparatus, method and program therefore for digitally making available certificate data for a piece or a plurality of pieces of attribute data representing one or more attributes of an entity including an individual.

### BACKGROUND ART

Today, pieces of data used to confirm an individual's attributes including name and address of the individual, such as a driver's license, a passport, a graduation certificate, are managed in a fragmented manner, without being linked to one another. In addition to these public institutions, we are making user registrations to numerous services and depositing our personal data with them. The usage histories of those services may also be stored and used as data representing personal attributes.

### SUMMARY OF INVENTION

### TECHNICAL PROBLEM

Currently, each institution manages one or more attributes independently, and if these plurality of pieces of personal attribute data or a part of them can be used digitally, it will be possible to design a variety of convenient services that do not exist today. For example, a graduation certificate is used as a proof of attributes such as the name of the university from which an individual graduated, the year and month of the graduation, etc. In order to use services that require confirmation of these attributes, a certificate must be issued in writing from the university from which the individual graduated. If this certificate can be referenced digitally and reliably on a computer network, the degree of freedom of identity confirmation in various services will be greatly enhanced.

In this specification, the explanation is given mainly for individuals, but the spirit of the invention can be applied to various entities, not limited to individuals. As an example, it is conceivable to apply the invention to one or more attributes of an IoT device.

The present invention was made in view of such a problem, and its objective is to provide an apparatus, a method, and a program for digitally making available certificate data for one or more pieces of attribute data representing one or more attributes of an entity managed by an institution.

### SOLUTION TO PROBLEM

To achieve the objective, a first aspect of the invention is a method for providing certificate data for a plurality of pieces of attribute data representing a plurality of attributes of an entity that have been confirmed by an institution, comprising: generating, by a server used by the institution, the certificate data in response to a request for the certificate data from a terminal capable of communicating with the server, and sending, by the server, the certificate data and verification data corresponding to the certificate data to the terminal, wherein the certificate data includes a name of a certifying institution, a public key which is a subject of certification, and a hash value associated with contents of certification, and a sign by a secret key of the institution is added to the certificate data, wherein the hash value associated with the contents of certification is a Merkle root of a Merkle tree obtained by using a plurality of pieces of attribute data representing a plurality of attributes that are the contents of certification, and wherein the validation data includes (a) a plurality of pieces of attribute data representing a plurality of attributes that are contents of certification accessible by the server, or hash values of a portion thereof, or (b) a plurality of pieces of data including corrected attribute data obtained by adding additional data to at least part of the plurality of pieces of attribute data, or hash values of a portion thereof.

The second aspect of the present invention is the method of the first aspect, wherein the hash value associated with the contents of certification is a Merkle root of a Merkle tree, lowest nodes of which are respective hash values of a plurality of pieces of attribute data representing a plurality of attributes that are the contents of certification.

The thirst aspect of the present invention is the method of the first aspect, wherein the hash value associated with the contents of certification is a Merkle root of a Merkle tree, lowest nodes of which are respective hash values of a plurality of pieces of data including corrected attribute data obtained by adding additional data to at least part of the plurality of pieces of data representing a plurality of attributes that are the contents of certification.

The fourth aspect of the present invention is a program for causing a server to execute a method for providing certificate data for a plurality of pieces of attribute data representing a plurality of attributes of an entity that have been confirmed by an institution, the method comprising: generating, by the server, the certificate data in response to a request for the certificate data from a terminal capable of communicating with the server, and sending, by the server, the certificate data and verification data corresponding to the certificate data to the terminal, wherein the certificate data includes a name of a certifying institution, a public key which is a subject of certification, and a hash value associated with contents of certification, and a sign by a secret key of the institution is added to the certificate data, wherein the hash value associated with the contents of certification is a Merkle root of a Merkle tree obtained by using a plurality of pieces of attribute data representing a plurality of attributes that are the contents of certification, and wherein the validation data includes (a) a plurality of pieces of attribute data representing a plurality of attributes that are contents of certification accessible by the server, or hash values of a portion thereof, or (b) a plurality of pieces of data including corrected attribute data obtained by adding additional data to at least part of the plurality of pieces of attribute data, or hash values of a portion thereof.

The fifth aspect of the present invention is an apparatus for providing certificate data for a plurality of pieces of attribute data representing a plurality of attributes of an entity that have been confirmed by an institution, which: generate the certificate data in response to a request for the certificate data from a terminal capable of communicating with the apparatus, and send the certificate data and verification data corresponding to the certificate data to the terminal, wherein the certificate data includes a name of a certifying institution, a public key which is a subject of certification, and a hash value associated with contents of certification, and a sign by a secret key of the institution is added to the certificate data, wherein the hash value associated with the contents of certification is a Merkle root of a Merkle tree obtained by using a plurality of pieces of attribute data representing a plurality of attributes that are the contents of certification, and wherein the validation data includes (a) a plurality of pieces of attribute data representing a plurality of attributes that are contents of certification accessible by the server, or hash values of a portion thereof, or (b) a plurality of pieces of data including corrected attribute data obtained by adding additional data to at least part of the plurality of pieces of attribute data, or hash values of a portion thereof.

According to one aspect of the invention, by generating and issuing certificate data including a Merkle root of a Merkle tree obtained using one or more pieces of attribute data representing one or more confirmed attributes of an individual, the individual is able to digitally disclose the desired portion of its attributes to others as needed.

### BRIEF DESCRIPTION OF DRAWINGS

FIG. 1 shows an apparatus according to one embodiment of the present invention.
FIG. 2 shows a method according to one embodiment of the present invention.
FIG. 3 schematically shows the certificate data for one embodiment of the present invention.
FIG. 4 shows a Merkle tree including a Merkle root described as a hash value associated with the certification contents of the certificate data shown in FIG. 3.

### DESCRIPTION OF EMBODIMENTS

The following is a detailed description of the embodiment of the present invention with reference to the drawings.

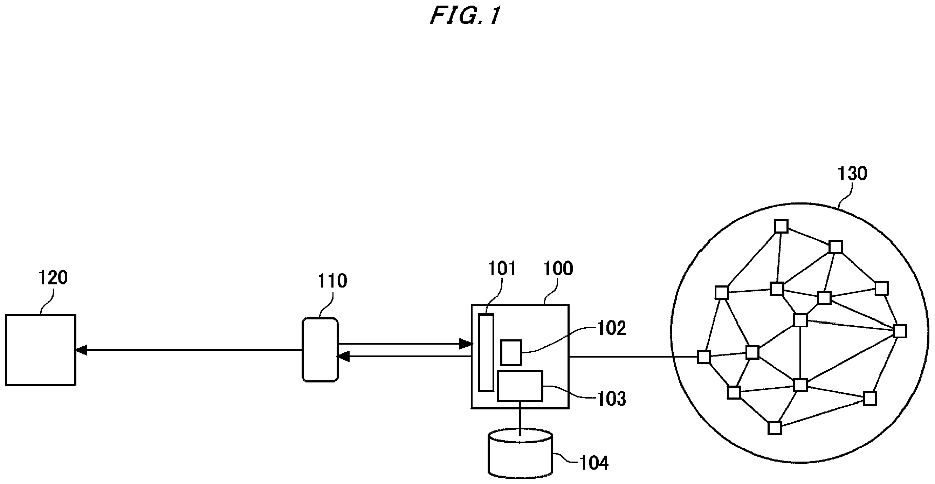

FIG. 1 shows an apparatus according to one embodiment of the present invention. The apparatus 100 is an institution apparatus used by an institution that manages one or more attributes of an individual. The apparatus 100 has an access to one or more pieces of attribute data representing one or more confirmed attributes of the individual. Upon receiving a request for issuance or generation of certificate data for the one or more pieces of attribute data representing the one or more attributes from the terminal 110 used by the individual, the institution apparatus 100 generates the certificate data and sends it to the terminal 110 via the computer network. The certificate data is then sent from the terminal 110 to the verification apparatus 120 that requires verification of one or more attributes of the individual.

The institution apparatus 100 comprises a communication unit 101 such as a communication interface, a processing unit 102 such as a processor, a CPU, etc., and a storage unit 103 including a storage apparatus or a storage medium such as a memory, a hard disk, etc., and can be configured by executing a program for performing each process. The institution apparatus 100 may include one or more apparatuses, computers or servers, and the program may include one or more programs, and may be stored on a computer-readable storage medium to form a non-transitory program product. The program may be stored in a storage unit 103 or in a storage apparatus or a storage medium accessible from the apparatus 100 via a computer network, and may be executed by the processing unit 102. Although not shown, the terminal 110 and the verification apparatus 120 may similarly comprise a communication unit, a processing unit and a storage unit.

The institution apparatus 100 may further comprise a database 104 that stores one or more pieces of attribute data representing one or more attributes of each individual. The database 104 may further store generated certificate data, verification data for attribute verification using the certificate data, etc. The following description assumes that these pieces of data are stored in the database 104, but all or part of the data may be stored in the storage unit 103 or in a storage apparatus or storage medium accessible from the apparatus 100.

The transaction containing the generated certificate data may be sent to the blockchain network 130 with multiple nodes for storage, at the same time as, or before or after, the time of the transmission of the certificate data to the terminal 110.

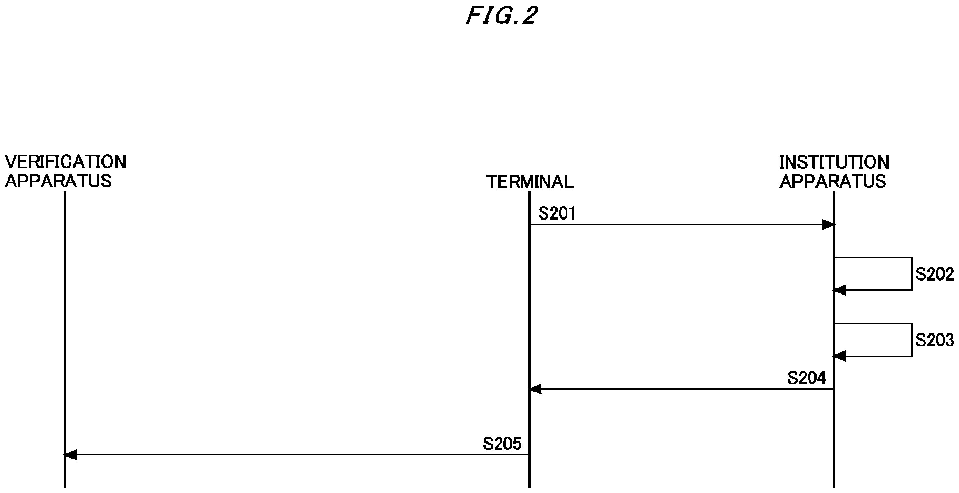

FIG. 2 shows the method according to the first embodiment of the invention. The institution apparatus 100 confirms one or more attributes of each individual in some manner, and stores the pieces of attribute data representing them in the database 104. If the operator of the institution apparatus 100 is a university, after confirming that the individual is a graduate, attribute data representing attributes such as name, university name, department name, and year of graduation may be stored. If the operator of the institution apparatus 100 is a cryptographic asset exchange, attribute data representing attributes such as name, address, date of birth, gender, country of residence, etc., which are confirmed by the identity verification performed before starting transactions as a user, are stored.

The institution apparatus 100 first receives a request for certificate data from the terminal 110 (S201) and generates certificate data (S202). The request may include a public key that is the subject of the certificate data generation. At the same time as, or before or after, the time of certificate data generation, the institution apparatus 100 acquires the verification data necessary for verification of the certificate data (S203). The acquisition may be performed by generation or by reading the data from a storage device or storage medium accessible from the institution apparatus 100.

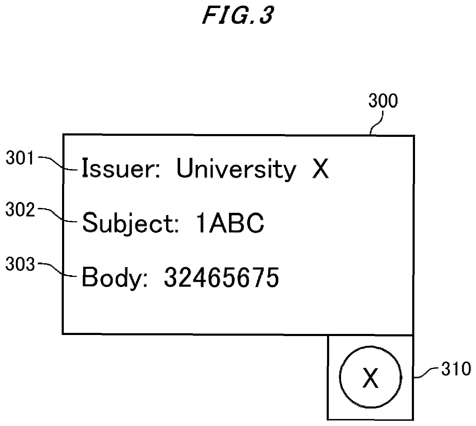

FIG. 3 shows schematically the certificate data according to the first embodiment of the invention. Certificate data 300 is an example of X University issuing a certificate. "University X" is described as the issuer 301 in the issuer field, a public key "1ABC" is described as the subject 302 in the subject field, "32465675" is described as the hash value 303 associated with the contents of the certification in the body field. A signature 310 by University X is added. The public key described as the subject 302 is owned by one of the individuals, and the possession of a public key in public key cryptography scheme means that the private key corresponding to the public key is accessible.

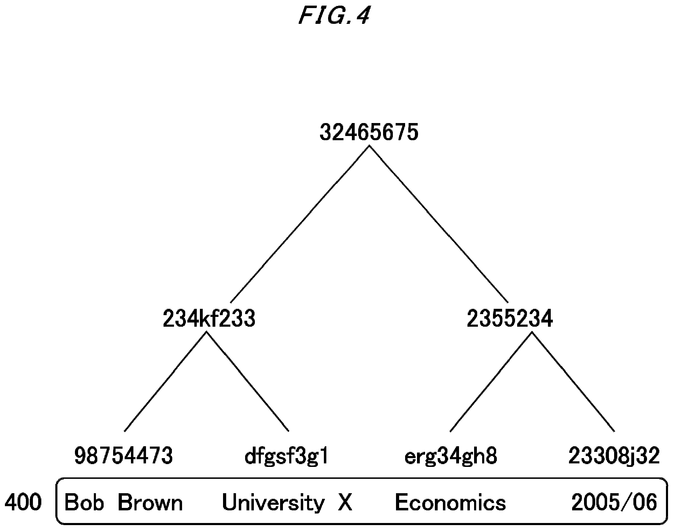

The hash value 303 associated with the contents of certification can be a Merkle root of a Merkle tree, nodes of which are respective hash values of one or more pieces of attribute data representing one or more attributes to be certified. FIG. 4 shows a Merkle tree that includes as its Merkle root the hash value associated with the contents of the certificate data shown in FIG. 3. The hash value obtained from the name Bob Brown is "98754473", the has value obtained from the university name University X is "dfgsf3g1", the hash value obtained from the department name Economics is "dfgsf3g1", the hash value obtained from the department name erg34gh8" and the hash value obtained from the graduation date 2005/06 is "23308j32." These are the lowest nodes of the Merkle tree. Next, a new hash value is obtained using the hash value obtained from the name and the hash value obtained from the university name. Also, a new hash value is obtained using the hash value obtained from the department name and the graduation year. These are the nodes of the second level of the Merkle Tree. Then, a new hash value is obtained using the hash values of the first and second nodes of the second level, and this become the single node of the third level of the Merkle tree, namely the Merkle root. Although a three-level Merkle tree is illustrated here, the number of layers is variable depending on the number of attributes managed for each individual in the institution apparatus 100.

If the hash value 303 associated with the contents of certification is a Merkle root, the verification data 400 corresponding to the certificate data 300 may include the plurality of pieces of attribute data of the plurality of lowest nodes of the Merkle tree or hash values of at least some of them, or both. Even when the verification data 400 is the plurality of pieces of attribute data of the lowest nodes of the Merkle tree, the individual using the terminal 110 which requested the certificate data 300 may not know in what data format those pieces of attribute data are stored, for example as a date can be expressed in various manners. Details are further described below.

The institution apparatus 100 sends the generated certificate data 300 and the verification data 400 corresponding to the certificate data 300 to the terminal 110 (S204). When the public key of the signer, X University, cannot be calculated from the signature 310, it is preferrable to add the public key or corresponding identification information to the certificate data 300 or include it in the certificate data 300.

The terminal 110 sends the certificate data to the verification apparatus 120 which requires the verification of one or more attributes of the individual using terminal 110, and also sends attribute data of one or more attributes to be certified, and one or more hash values of attribute data obtained by excluding the attribute data of one or more attributes to be certified from the verification data, after adding a signature, by a secret key corresponding to a public key included in the certificate data 300, to them (S205). Here, the signature by the individual using the terminal 110 may be with respect to the attribute data of one or more attributes to be certified, and one or more hash values of attribute data obtained by excluding the attribute data of one or more attributes to be certified from the verification data. However, it is not necessarily limited to this example. A signature may be made with respect to one or more pieces attribute data to be certified, or it may be made with respect to one or more hash values of respective pieces of attribute data obtained by excluding those pieces of attribute data from the verification data 400. Alternatively, the signature may be directed to other subjects.

When the name of an individual using the terminal 110 needs to be verified by the verification apparatus 120, an example is to add a signature to data including the attribute data "Bob Brown" and hash values "dfgsf3g1," "erg34gh8" and "23308j32," and send it from terminal 110 to the verification apparatus 120.

The verification apparatus 120 verifies the signature to confirm that the signature was made by the owner of the public key that is the subject 302 of the certificate data 300, calculate hash values corresponding to the received one or more pieces of attribute data, and, based on the match between the Merkle root obtained by using the calculated hash values together with received one or more hash values and the hash value 303 associated with the contents of the certification of the certificate data 300, confirm that one or more attributes of the owner of the public key have been confirmed by the institution that generated the certificate data 300. In addition, by verifying the certificate data 300 itself, the verification apparatus 120 can confirm the institution that have confirmed the one or more attributes.

Thus, by generating certificate data including a Merkle root of a Merkle tree whose lowest nodes are one or more hash values for one or more pieces of attribute data representing one or more personal attributes that have been confirmed, the individual is able to disclose the desired portion of its attributes to others as needed. With respect one or more attributes that are not desired to be disclosed can be hidden by sending their hash values.

Since the hash values of one or more attribute data, which is verification data, are each calculated by a unidirectional hash function, it is difficult to identify attribute data based on its hash value. However, in order to enhance the difficulty to decipher, it may be desirable to use corrected attribute data obtained by adding additional data, such as random numbers, pseudo-random numbers, etc., to attribute data representing attributes as the data for lowest nodes of a Merkle tree. It is not necessary to add additional data to all pieces of attribute data. As an example, if it is known or inferable that gender is included in one or more attributes to be certified, since there are only two choices, male or female, to the value of the attribute, the attribute data can be identified based on a hash value by calculating hash values of respective values. This is also the case for an attribute with more choices such as nationality, etc. If the hash calculation is done by brute force, it may be possible to identify the attribute data based on a hash value. Since the addition of additional data makes decoding significantly more difficult, it is conceivable that only one or more with high decipherability of a plurality of pieces of attribute data representing a plurality of attributes, that are the contents of certification, may be made corrected attribute data. Such additional data may be referred to as nonce or salt. In this case, the pieces of data sent from the terminal 110 to the verification apparatus 120, that requires verification of the one or more attributes of the individual using the terminal 110, after adding a signature, are one or more attribute data or corrected attribute data of one or more attributes to be certified, and one or more hash values of respective pieces of data obtained by excluding those pieces of attribute data or corrected attribute data from the verification data 400.

In the above explanation, as hash values to be sent to the verification apparatus 120, one or more hash values of respective pieces of data obtained by excluding one or more attribute data of one or more attributes to be certified from the verification data are explained. However, in the example in FIG. 4, instead of the hash values "dfgsf3g1," "erg34gh8" and "23308j32", "dfgsf3g1" and "2355234" may be used. Also, instead of simply sending the hash values, it is conceivable to send them in a data structure that represents the path from the root node, as shown below.

```
         "root:32465675" -> {{{"raw:Bob Brown"},
 "hash:dfgsf3g1"}, "2355234"}
```

The data to be sent to the verification apparatus 120 may be hash values of all lowest nodes of a Merkle tree whose Merkle root is the hash value 303 associated with the contents of certification. In this case, the hash values are sent to the verification apparatus 120 in the following data structure, and, by storing the attribute types corresponding to respective positions in the data structure or making them available for reference, the verification apparatus 120 can determine that an individual using the terminal 110 can at least access the respective pieces of attribute data, which are the values of respective attribute types, without disclosing the values of attribute types in a hidden manner. By doing so, it can be certified that those attributes exist in the individual. If only a portion of the attribute types are stored or made available for reference, then the certification of the existence of the attributes is possible for such a portion.

```
         "root:32465675" -> {{"hash:98754473",
 "hash:dfgsf3g1"}, {"hash:erg34gh8", "hash:23308j32"}}
```

In this example, it is possible to determine that an individual using the terminal 110 has access to the name, university name, faculty name, and graduation year and can calculate hash values of those pieces of attribute data. If it is sufficient to determine that the name and university name can be accessed, as in the previous example, the hash value "2355234" of the node one level higher obtained by using the hash value of the faculty name and the hash value of the year of graduation may be sent.

In the above explanation, we have given an example of a single piece of certificate data being issued, but a plurality of pieces of certificate data can be issued for a given public key. If attribute data representing various attributes confirmed by various institutions is associated with the public key held by each individual in this manner, the public key can function as a digital ID that allows each individual to disclose the necessary attributes to the necessary parties.

In the above embodiments, it is to be noted that if the term "only" is not written, such as in "based only on x", "in response to x only", or "in case of x only", in the present Specification, it is assumed that additional information may also be taken into account. Also, as an example, it is to be noted that a description "b is performed in case of a" does not necessarily mean "b is always performed in case of a" or "a is performed immediately after a" except where expressly stated.

In addition, as a caveat, even if there are aspects of a method, a program, a terminal, an apparatus, a server or a system (hereinafter referred to as "method, etc.") that perform operations different from those described herein, each aspect of the invention is intended to perform the same operation as one of the operations described herein, and the existence of an operation different from those described herein does not mean that the method, etc. is outside the scope of each aspect of the invention.

### REFERENCE SIGNS LIST

- 100: apparatus
- 101: communication unit
- 102: processing unit
- 103: storage unit
- 104: database
- 110: terminal
- 120: verification apparatus
- 130: blockchain network
- 300: certificate data
- 301: issuer
- 302: subject
- 303: hash value
- 310: signature
- 400: verification data

## Claims

1. A method for providing certificate data for a plurality of pieces of attribute data representing a plurality of attributes of an entity that have been confirmed by an institution, comprising:
generating, by a server used by the institution, the certificate data in response to a request for the certificate data from a terminal capable of communicating with the server, and
sending, by the server, the certificate data and verification data corresponding to the certificate data to the terminal,
wherein the certificate data includes a name of a certifying institution, a public key which is a subject of certification, and a hash value associated with contents of certification, and a sign by a secret key of the institution is added to the certificate data,
wherein the hash value associated with the contents of certification is a Merkle root of a Merkle tree obtained by using a plurality of pieces of attribute data representing a plurality of attributes that are the contents of certification, and
wherein the validation data includes (a) a plurality of pieces of attribute data representing a plurality of attributes that are contents of certification accessible by the server, or hash values of a portion thereof, or (b) a plurality of pieces of data including corrected attribute data obtained by adding additional data to at least part of the plurality of pieces of attribute data, or hash values of a portion thereof.

2. The method according to claim 1, wherein the hash value associated with the contents of certification is a Merkle root of a Merkle tree, lowest nodes of which are respective hash values of a plurality of pieces of attribute data representing a plurality of attributes that are the contents of certification.

3. The method according to claim 1, wherein the hash value associated with the contents of certification is a Merkle root of a Merkle tree, lowest nodes of which are respective hash values of a plurality of pieces of data including corrected attribute data obtained by adding additional data to at least part of the plurality of pieces of data representing a plurality of attributes that are the contents of certification.

4. A program for causing a server to execute a method for providing certificate data for a plurality of pieces of attribute data representing a plurality of attributes of an entity that have been confirmed by an institution, the method comprising:
generating, by the server, the certificate data in response to a request for the certificate data from a terminal capable of communicating with the server, and
sending, by the server, the certificate data and verification data corresponding to the certificate data to the terminal,
wherein the certificate data includes a name of a certifying institution, a public key which is a subject of certification, and a hash value associated with contents of certification, and a sign by a secret key of the institution is added to the certificate data,
wherein the hash value associated with the contents of certification is a Merkle root of a Merkle tree obtained by using a plurality of pieces of attribute data representing a plurality of attributes that are the contents of certification, and
wherein the validation data includes (a) a plurality of pieces of attribute data representing a plurality of attributes that are contents of certification accessible by the server, or hash values of a portion thereof, or (b) a plurality of pieces of data including corrected attribute data obtained by adding additional data to at least part of the plurality of pieces of attribute data, or hash values of a portion thereof.

5. An apparatus for providing certificate data for a plurality of pieces of attribute data representing a plurality of attributes of an entity that have been confirmed by an institution, which:
generate the certificate data in response to a request for the certificate data from a terminal capable of communicating with the apparatus, and
send the certificate data and verification data corresponding to the certificate data to the terminal,
wherein the certificate data includes a name of a certifying institution, a public key which is a subject of certification, and a hash value associated with contents of certification, and a sign by a secret key of the institution is added to the certificate data,
wherein the hash value associated with the contents of certification is a Merkle root of a Merkle tree obtained by using a plurality of pieces of attribute data representing a plurality of attributes that are the contents of certification, and
wherein the validation data includes (a) a plurality of pieces of attribute data representing a plurality of attributes that are contents of certification accessible by the server, or hash values of a portion thereof, or (b) a plurality of pieces of data including corrected attribute data obtained by adding additional data to at least part of the plurality of pieces of attribute data, or hash values of a portion thereof.

6. A method for certifying at least part of a plurality of attributes using certificate data for a plurality of pieces of attribute data representing the plurality of attributes of an entity that have been confirmed by an institution, comprising:
receiving verification data including (a) a plurality of pieces of attribute data representing the plurality of attributes, or hash values of a portion thereof, or (b) a plurality of pieces of data including corrected attribute data obtained by adding additional data to at least part of a plurality of pieces of attribute data representing the plurality of attributes, or hash values of a portion thereof,
sending the certificate data including a name of a certifying institution, a public key which is a subject of certification, and a hash value associated with contents of certification, and
sending one or more pieces of attribute data or corrected attribute data of one or more attributes to be certified, one or more hash values obtained by using respective pieces of data obtained by excluding the one or more pieces of attribute data or corrected attribute data of the one or more attributes to be certified from the verification data, and a sign by a secret key corresponding to the public key,
wherein the hash value associated with the contents of certification is a Merkle root of a Merkle tree obtained by using a plurality of pieces of attribute data representing the plurality of attributes.

7. The method according to claim 6, wherein the sign is a sign to one or more pieces of data obtained by excluding one or more pieces of attribute data or corrected attribute data of the one or more attributes to be certified from the verification data.

8. A program for causing a computer to execute a method for certifying at least part of a plurality of attributes using certificate data for a plurality of pieces of attribute data representing the plurality of attributes of an entity that have been confirmed by an institution, the method comprising:
receiving verification data including (a) a plurality of pieces of attribute data representing the plurality of attributes, or hash values of a portion thereof, or (b) a plurality of pieces of data including corrected attribute data obtained by adding additional data to at least part of a plurality of pieces of attribute data representing the plurality of attributes, or hash values of a portion thereof,
sending the certificate data including a name of a certifying institution, a public key which is a subject of certification, and a hash value associated with contents of certification, and
sending one or more pieces of attribute data or corrected attribute data of one or more attributes to be certified, one or more hash values obtained by using respective pieces of data obtained by excluding the one or more pieces of attribute data or corrected attribute data of the one or more attributes to be certified from the verification data, and a sign by a secret key corresponding to the public key,
wherein the hash value associated with the contents of certification is a Merkle root of a Merkle tree obtained by using a plurality of pieces of attribute data representing the plurality of attributes.

9. An apparatus for certifying at least part of a plurality of attributes using certificate data for a plurality of pieces of attribute data representing the plurality of attributes of an entity that have been confirmed by an institution, which:
receive verification data including (a) a plurality of pieces of attribute data representing the plurality of attributes, or hash values of a portion thereof, or (b) a plurality of pieces of data including corrected attribute data obtained by adding additional data to at least part of a plurality of pieces of attribute data representing the plurality of attributes, or hash values of a portion thereof,
send the certificate data including a name of a certifying institution, a public key which is a subject of certification, and a hash value associated with contents of certification, and
send one or more pieces of attribute data or corrected attribute data of one or more attributes to be certified, one or more hash values obtained by using respective pieces of data obtained by excluding the one or more pieces of attribute data or corrected attribute data of the one or more attributes to be certified from the verification data, and a sign by a secret key corresponding to the public key,
wherein the hash value associated with the contents of certification is a Merkle root of a Merkle tree obtained by using a plurality of pieces of attribute data representing the plurality of attributes.

10. A method for certifying existence of at least part of a plurality of attributes using certificate data for a plurality of pieces of attribute data representing the plurality of attributes of an entity that have been confirmed by an institution, comprising:
receiving verification data including (a) a plurality of pieces of attribute data representing the plurality of attributes, or hash values of a portion thereof, or (b) a plurality of pieces of data including corrected attribute data obtained by adding additional data to at least part of a plurality of pieces of attribute data representing the plurality of attributes, or hash values of a portion thereof,
sending the certificate data including a name of a certifying institution, a public key which is a subject of certification, and a hash value associated with contents of certification, and
sending hash values of all pieces of attribute data of the plurality of attributes obtained by using the verification data, and a sign by a secret key corresponding to the public key,
wherein the hash value associated with the contents of certification is a Merkle root of a Merkle tree obtained by using a plurality of pieces of attribute data representing the plurality of attributes.
